# DEMANDE DE BREVET EUROPEEN

(11) **EP 1 108 699 A2**
(43) Date de publication de la demande: **20.06.2001**
(21) Numéro de dépôt: 00450017.9
(22) Date de dépôt: 14.12.2000
(51) Int. Cl.: C05F 1/00, C05F 5/00, C05F 11/00, C05F 17/00, C05F 17/02

(54) **Procédé de traitement par compostage de déchets graisseux et dispositif pour sa mise en oeuvre**

(30) Priorité: 14.12.1999 FR 9915764
(71) Demandeur: Labat Assainissement Vidange, 40800 Aire Sur Adour (FR)
(72) Inventeur: Labat, Xavier, 40800 Aire sur Adour (FR)
(74) Mandataire: Thébault, Jean-Louis

(57) **Abrégé**

- L'objet de l'invention est un procédé de traitement par compostage de déchets graisseux, à base notamment de graisses animales et/ou végétales, et/ou de farines animales, caractérisé en ce qu'il consiste à mélanger:
   - 10 à 40 % de déchets graisseux et/ou de farines animales, de préférence sous forme solide/visqueuse,
   - 0 à 50% de produits fibreux, de préférence du fumier,
   - 0 à 10% de produits absorbants, de préférence de la sciure,
   - le complément étant du marc, de préférence du marc de raisin.

## Description

La présente invention se rapporte à un procédé de traitement par compostage de déchets graisseux, à base notamment de graisses animales et/ou végétales, ainsi qu'au dispositif pour sa mise en oeuvre.

Ce procédé vise à valoriser les déchets graisseux provenant des industries agro-alimentaires, ainsi que des installations de prétraitement des eaux usées urbaines ou industrielles tels que les dégraisseurs, ces déchets étant collectés à l'occasion de l'entretien des dispositifs de séparation, de rétention ou de stockage.

Ces déchets graisseux, constitués essentiellement de corps gras d'origine végétale et/ou animale, comprennent en règle générale une phase aqueuse recouverte d'une phase solide ou pâteuse et éventuellement des corps étrangers en suspension ou sédimentés.

Jusqu'ici, ces déchets graisseux, après un prétraitement visant à réduire la quantité d'eau, étaient stockés entre autres dans des décharges ou transformés en équarrissage. Néanmoins, la réglementation de plus en plus draconienne en matière de protection de l'environnement limite l'utilisation des centres d'enfouissement au stockage des déchets ultimes, si bien que les responsables de décharge ont tendance à refuser le stockage des déchets graisseux.

Une première solution pour traiter ces déchets consiste à les incinérer. Toutefois, cette solution ne donne pas satisfaction, car elle demande des installations complexes et coûteuses qui consomment énormément d'énergie et engendre des dégagements gazeux, notamment des dioxines, qu'il faut traiter grâce à des filtres à charbon actif.

Une deuxième solution consiste à opérer par dégradation biologique dans un réacteur en utilisant une souche de bactéries. Toutefois, là encore cette solution ne donne pas satisfaction, car à chaque type de déchets graisseux correspond un type de bactérie approprié, si bien que cette solution ne permet de traiter qu'un type de graisse par réacteur, ayant une composition sensiblement constante. D'autre part, ce procédé engendre la formation de boues qu'il faut traiter.

Une troisième solution est décrite dans le document FR 2.720.014. Selon ce document, les déchets graisseux sont homogénéisés et chauffés à une température supérieure à la température de fusion maximale des corps gras qu'ils contiennent. Ensuite, ils subissent une étape de séparation dynamique, notamment par centrifugation, permettant l'obtention d'une phase organique grasse, d'une phase aqueuse et d'une phase solide au moins partiellement déshydratée. La phase grasse récupérée subit une dégradation thermique de façon à assurer une combustion complète des corps gras contenus dans ladite phase grasse, au moins une partie de la chaleur produite au cours de cette étape étant utilisée pour chauffer lesdits déchets graisseux au cours de ladite première étape. Comme précédemment, cette solution ne donne pas pleinement satisfaction, car les phases solide et aqueuse qui représentent plus de 20% des déchets graisseux ne sont pas traitées par ce procédé. Ces deux phases ne peuvent être traitées qu'avec d'autres procédés, notamment celui de l'invention.

Aussi, la présente invention vise à pallier les inconvénients de l'art antérieur en proposant un procédé de traitement des graisses animale et/ou végétale, quelle que soit leur provenance et leur constitution, qui assure le traitement efficace de 100% du produit. Ce procédé de traitement par compostage relativement simple, ne nécessite qu'un faible apport énergétique comparé aux procédés de l'art antérieur, permet d'obtenir un compost riche, dont la composition respecte les normes en vigueur en ce qui concerne les produits d'épandage agricole et assure une valorisation de ce type de déchets.

Le procédé de l'invention peut également s'appliquer aux farines animales et aux boues issues des autres procédés de traitement des graisses organiques.

A cet effet, l'invention a pour objet un procédé de traitement par compostage de déchets graisseux, à base notamment de graisses animales et/ou végétales, caractérisé en ce qu'il consiste à mélanger:
- 10 à 40 % de déchets graisseux, de préférence sous forme solide/visqueuse,
- 0 à 50% de produits fibreux, de préférence du fumier,
- 0 à 10% de produits absorbants, de préférence de la sciure,
- le complément étant du marc, de préférence du marc de raisin.

De préférence, lesdits déchets graisseux subissent préalablement une méthanisation avant le mélange.

Selon une autre caractéristique, le marc et au moins les produits fibreux sont brassés préalablement à l'incorporation des déchets graisseux.

Selon une technique, le mélange formé est disposé sous forme d'andains qui sont brassés régulièrement afin d'homogénéiser et d'oxygéner le mélange.

Selon une autre caractéristique, au moment du brassage, une quantité de déchets graisseux, de préférence pâteux/visqueux, peut être injectée dans l'andain pour augmenter la quantité de graisse "digérée" et améliorer de la sorte le rendement.

De préférence, les déchets graisseux sont préalablement filtrés afin de séparer les phases solide et liquide grâce à un filtre biodégradable.

De plus, afin de compenser l'évaporation causée par la réaction exothermique et maintenir un taux d'humidité adéquat, on pulvérise un liquide, de préférence la phase liquide issue de la filtration préalable, sur le mélange et/ou au moment du brassage du mélange.

L'invention propose également un dispositif pour la mise en oeuvre du procédé précédemment défini, caractérisé en ce qu'il comprend une aire étanche équipée de moyens de récupération des éventuels effluents résiduels ainsi que des moyens de brassage et d'injection de graisses sous forme pâteuse/visqueuse, et éventuellement des moyens de pulvérisation d'un liquide sur le mélange ainsi que des moyens pour pulvériser de l'air dans le mélange.

Selon un mode de réalisation préféré, le dispositif comprend des moyens de filtration biodégradable constitués d'un filtre formé par un lit à base de marc de raisin.

D'autres caractéristiques et avantages ressortiront de la description qui va suivre du dispositif selon l'invention, description donnée à titre d'exemple uniquement et en regard des dessins annexés sur lesquels :
- la figure 1 est une vue schématique d'un dispositif de filtration utilisant un filtre biodégradable, et
- la figure 2 une vue schématique du dispositif de traitement par compostage des graisses animale et/ou végétale.

Le procédé de l'invention assure le traitement et la valorisation des déchets graisseux provenant des industries agro-alimentaires et/ou fondoirs, des installations de prétraitement des eaux usées urbaines ou industrielles tels que les dégraisseurs et des bacs à graisse des particuliers, ainsi que de tous les résidus issus des procédés par tamisage, par filtration (centrifugation, coagulation, décantation) ou par dégradation biologique, notamment de l'art antérieur.

Ces déchets graisseux, constitués essentiellement de corps gras d'origine animale et/ou végétale, peuvent se présenter sous forme solide ou de manière générale sous forme d'une phase aqueuse recouverte d'une phase solide ou pâteuse avec éventuellement des corps étrangers en suspension ou sédimentés.

La collecte de ces déchets est réalisée par camion-benne dans le cas de déchets solides, appelé par la suite produit A, ou par camion-citerne équipé d'une pompe dans le cas des déchets mixtes solide/liquide.

Selon une première variante de l'invention, suite à cette collecte, les déchets mixtes solide/liquide sont prétraités afin de séparer les phases solide et liquide.

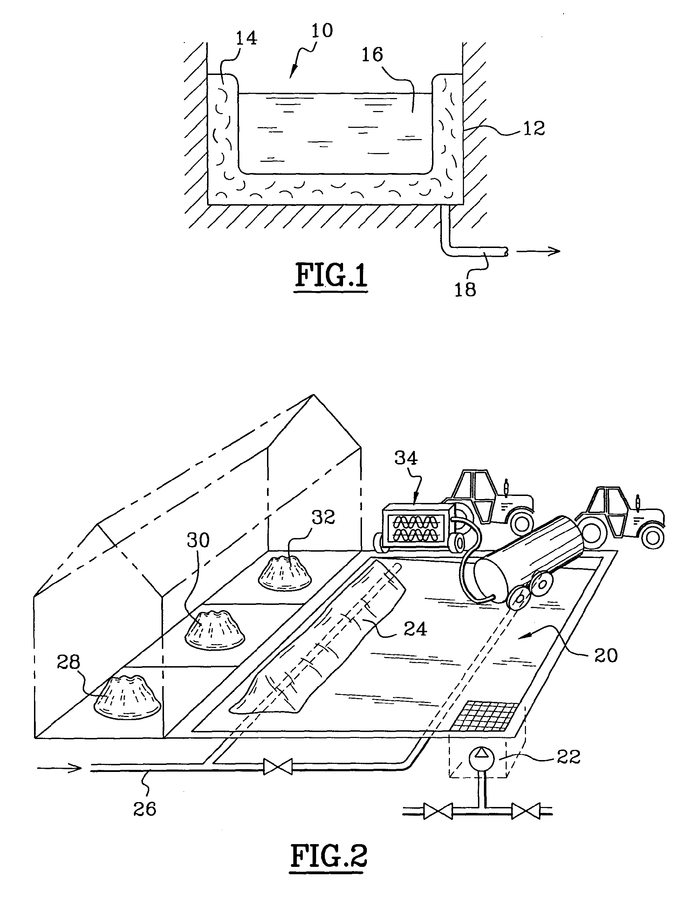

Selon l'invention, cette séparation est obtenue par filtration en utilisant un filtre biodégradable 10 à base de marc de raisin ou de paille compressée, illustré par la figure 1. En effet, les filtres mécaniques classiques ne permettent pas d'obtenir une séparation efficace, car ils se colmatent rapidement avec ce type de déchets.

Selon l'invention, on recouvre le fond et les parois latérales d'une cuve 12 avec une composition à base de marc de raisin 14 puis on déverse sur le lit à base de marc de raisin ainsi formé, les déchets graisseux mixtes 16. A titre d'exemple, pour une quantité d'1 m en hauteur de déchets mixtes, on utilise un lit de marc de raisin de 15 cm d'épaisseur.

On constate que le pouvoir filtrant de ce type de filtre biodégradable est relativement élevé car 99% des graisses sont récupérées. Après cette filtration, on obtient un produit B solide composé approximativement de 5 à 30% de marc de raisin et 70 à 95% de graisse solide.

La phase liquide 18, récupérée au fond de la cuve, peut être récupérée pour être utilisée ultérieurement comme cela sera expliqué.

Les avantages d'une telle filtration résident dans le fait que ce filtre ne se colmate pas et qu'il n'est pas nécessaire de le nettoyer. Par ailleurs, cette technique permet de valoriser un autre type de déchet.

De façon connue, la séparation des déchets mixtes solide/liquide peut se faire par décantation. La phase solide ainsi récupérée, d'aspect pâteux/visqueux, est appelée par la suite produit C. Comme précédemment, la phase liquide peut être rejetée ou bien récupérée pour être utilisée ultérieurement comme cela sera expliqué.

Les produits A et B, solides, sont stockés sur des aires étanches avec des moyens de récupération des éventuels effluents.

Selon une seconde variante de l'invention, les déchets graisseux collectés subissent une méthanisation préalablement.

Cette méthanisation a pour objectif, d'une part, d'assurer un pré-traitement des déchets graisseux collectés (suppression des odeurs, diminution des matières sèches, minéralisation des éléments fertilisants), et d'autre part, de valoriser le bio gaz produit par la production d'électricité grâce à un groupe électrogène.

Afin de respecter la séparation des flux de graisses d'origine agroalimentaire et de boues de flottation, pour une meilleure traçabilité, l'unité de méthanisation comprend deux chaînes de traitement séparées.

Chaque chaîne comprend dans le sens d'écoulement du flux, des moyens de réception des déchets graisseux collectés, un échangeur, un digesteur et des moyens de gestion du bio gaz.

Les moyens de réception des déchets graisseux collectés se présentent sous forme de fosse de réception, de capacité suffisante pour une vidange quotidienne, couverte pour limiter les odeurs et munie d'un agitateur ainsi qu'éventuellement de résistances afin d'homogénéiser le produit. En sortie, les déchets graisseux sont sous forme d'effluents acheminés par des pompes et des conduites vers l'échangeur.

Ce dernier permet d'assurer la montée en température de l'effluent avant son introduction dans le digesteur. Le chauffage est réalisé par cycle successif d'effluent, par exemple de 5 à 8 m³ pour 7000 tonnes traitées, afin d'assurer une introduction progressive des graisses dans le digesteur et ainsi régulée la production de bio gaz. L'échangeur est relié à une chaudière fonctionnant au bio gaz qui l'alimente en eau chaude.

Le digesteur comprend une cuve, de préférence en béton armé ou en acier vitrifié, avec une isolation extérieure et un fond conique. Avantageusement, cette cuve est munie d'un système de recirculation externe ayant pour fonction d'assurer une homogénéisation et un brassage de l'effluent par l'intermédiaire d'une pompe de recirculation. L'évacuation du digestat est gravitaire par l'intermédiaire d'un trop plein qui se déverse dans une cuve de stockage avant d'être traité selon le procédé de compostage de l'invention.

Les moyens de gestion qui peuvent être commun aux deux chaînes, comprennent un gazomètre souple pour le stockage du bio gaz produit par le digesteur ainsi qu'éventuellement un débitmètre et un système d'analyse. Le gaz est utilisé pour faire fonctionner la chaudière alimentant en eau chaude les échangeurs et un groupe électrogène pour éventuellement déshydrater le compost final, évaporer l'eau issue du procédé et la revente.

Une torchère de sécurité est également prévue pour permettre l'élimination du gaz en cas d'arrêt de l'installation.

Cette méthanisation permet:
- de garantir un confinement des déchets jusqu'à leur utilisation, supprimant les problèmes d'odeur,
- la fluidisation du produit assurant une meilleure manipulation,
- le pré-traitement des graisses facilitant leur décomposition et la réduction du temps de compostage,
- l'homogénéisation en raison du brassage,
- l'hygiénisation du produit obtenu par fermentation en condition anaérobie assurant la destruction des germes pathogènes, et
- la formation de bio gaz source d'énergie.

En condition d'anaérobie, les graisses se dégradent fortement. Ainsi, 80% de la matière organique est dégradée au cours de la méthanisation, chaque tonne de graisse assurant la production d'environ 500kWh, équivalent à 269 m3 de bio gaz brut.

Le procédé de traitement par compostage proprement dit est maintenant décrit en détail, au vu de la figure 2.

Sur une aire 20, de préférence étanche, équipée de moyens 22 de récupération des éventuels effluents résiduels, on dispose, de préférence sous forme d'andains 24, un mélange de composition suivante :
- 10 à 40 %, de préférence de 20 à 30%, de produits A et/ou B sous forme solide/visqueuse,
- 0 à 50%, de préférence de 0 à 30%, de produits fibreux,
- 0 à 10% de produits absorbants,
- le complément étant du marc, de préférence du marc de raisin.

Dans cet exposé, on entend par marc le résidu des produits que l'on a pressés pour en extraire le jus, tels que les fruits, notamment le raisin, betteraves ou analogue contenant du sucre, susceptible de produire de l'alcool. Le marc combiné aux déchets graisseux permet de maintenir la température du mélange à approximativement 65°C ou plus, ce qui assure la décomposition desdits déchets graisseux en cassant les acides gras.

Les produits fibreux évitent le tassement du mélange et assurent une oxygénation efficace du mélange permettant la continuité de la réaction de décomposition. Ainsi, en fonction de la nature du marc et des caractéristiques finales du compost recherchées, la quantité de produits fibreux peut varier de 0 à 50%. Par exemple pour un mélange très dense, la quantité de produits fibreux avoisinera les 50%.

Comme produits fibreux, on peut utiliser du fumier de préférence, des fibres végétales ou tout produit analogue, bruts ou précompostés non matures. Ces produits peuvent être criblés ou broyés préalablement.

Les produits fibreux ne sont pas obligatoires mais ils permettent d'obtenir de meilleurs résultats.

En variante, l'oxygénation peut être réalisée en soufflant ou en aspirant de l'air grâce à des conduits 26 disposés sous les andains ou bien en brassant très régulièrement les andains afin d'empêcher le tassement de ces derniers.

Les produits absorbants, par exemple de la sciure, permettent d'absorber les liquides résiduels et sont de préférence de nature organique. Aussi, selon la nature des produits traités, notamment du taux d'humidité, la quantité de produits absorbants peut varier.

Selon une autre caractéristique de l'invention, pour éviter l'apparition de boulettes, le marc et au moins les produits fibreux sont brassés préalablement, pour initier l'élévation de température, les déchets graisseux étant incorporés ultérieurement.

Avant mélange, les produits initiaux, produits A et/ou B, produits fibreux et absorbants sont stockés de préférence sous abris et référencés respectivement 28, 30, 32.

Selon l'invention, les andains sont brassés afin d'homogénéiser et d'oxygéner le mélange, approximativement tous les 3 à 4 jours durant une durée d'environ 3 mois suivant les caractéristiques finales du compost.

Pour augmenter la quantité de graisse "digérée" et améliorer de la sorte le rendement, on peut au moment du brassage injecter de la graisse du type produit C à l'aide de moyens 34 de brassage et d'injection. Cette injection peut se faire sur le mélange ou dans le mélange lorsque ce dernier est brassé.

Ainsi, chaque andain est brassé 8 à 15 fois, 5 à 10% de graisse C par rapport au poids de l'andain étant incorporée à chaque passage. Cette injection au fur et à mesure permet de traiter jusqu'à 30% de graisse supplémentaire.

Tout le long du traitement par compostage, il est important de maintenir le mélange à une température de l'ordre de 65°C ou plus et à un taux d'humidité de l'ordre de 30% à 50% pour assurer la bonne décomposition du produit.

On peut agir sur la température en augmentant l'oxygénation en soufflant de l'air sous les andains grâce aux conduits 26.

De même, pour maintenir le taux d'humidité, on peut pulvériser sur le mélange du liquide, notamment celui issu des produits B et C.

Dans le cas d'un traitement par compostage sous abris, il est nécessaire d'augmenter la quantité de liquide ajoutée, car l'évaporation causée par la réaction exothermique ne peut être compensée de façon naturelle par la pluie par exemple.

La décomposition s'achève après un traitement d'environ 3 mois et on obtient un compost qui ressemble à du terreau.

Ce temps de traitement peut être réduit lorsque les déchets graisseux sont préalablement soumis à une méthanisation.

En fin de maturation, on peut disposer les andains sous forme d'un tas unique ce qui permet de réduire la place nécessaire. Ce tas peut être disposé sous abris, ventilé et/ou en atmosphère contrôlée, afin d'obtenir au bout de quelques temps un compost sec prêt à être commercialisé. L'air aspiré peut être traité par un bio-filtre.

En réalisant cette fin de maturation sous abris, on atteint une température de l'ordre de 80°C qui contribue à l'hygiénisation du compost.

Une analyse du compost montre l'absence d'agents pathogènes, l'absence de salmonella, de larves nématodes et d'oeufs nématodes. De plus, on note que les 7 PCB principaux sont inférieurs à 0.21 mg/kg de MS, et nettement inférieurs aux valeurs limites fixées par la loi.

Selon une autre caractéristique, le compost est déshydraté pour faciliter son transport et sa distribution. Dans le cas d'un traitement préalable par méthanisation, l'énergie électrique produite est utilisée pour cette déshydratation.

A titre d'exemple, une surface de 2500 m² permet de traiter 7000 t/an de produit dont 2000 t/an de graisse et d'obtenir 2500 t/an de compost

Un exemple de composition du compost est donné dans le tableau ci-dessous.

| Paramètres | Résultat brut | Résultat sec |
|---|---|---|
| pH | 7 | |
| Matière sèche (en%) | 57.3 | |
| Matière organique (g/kg) | 481 | 841 |
| Azote total (g/kg) | 19.65 | 34.3 |
| Calcium (g/kg) | 11.22 | 19.6 |
| Magnésium (g/kg) | 1.87 | 3.3 |
| Potassium (g/kg) | 11.76 | 20.5 |
| Sodium (g/kg) | 0.28 | 0.5 |
| Phosphore (g/kg) | 6.27 | 10.9 |
| Rapport C/N | | 12.2 |

Cette analyse montre que le compost ainsi obtenu a des caractéristiques très intéressantes, car la quantité de matière organique est relativement élevée et le rapport C/N compris entre 10 et 30.

Avec un rapport C/N de 12.2, ce compost permet de limiter les risques de faim d'azote. De plus, sa teneur en matière organique de 48.1% montre qu'il s'agit bien d'un amendement organique selon la norme NFU 44-051. Enfin, l'apport d'azote, de phosphore et de potasse s'avère également très intéressant.

Un autre intérêt du procédé réside dans le fait que le compost obtenu est hygiénisé, car il ne présente aucun germe, car ces derniers sont détruits par la chaleur dégagée lors de la réaction de décomposition.

De plus, le compost obtenu respecte les normes en vigueur relatives aux produits d'amendements, notamment en ce qui concerne les métaux lourds.

| | Teneurs limites imposées par l'arrêté du 17 août 1998 (mg/kg de MS) | Teneur du compost obtenu par le procédé de l'invention (mg/kg de MS) |
|---|---|---|
| Cadmium (Cd) | 20 | 0.1 |
| Chrome (Cr) | 1000 | 8.2 |
| Cuivre (Cu) | 1000 | 70.4 |
| Mercure (Hg) | 10 | 0.1 |
| Nickel (Ni) | 200 | 5.2 |
| Plomb (Pb) | 800 | 6.9 |
| Zinc (Zn) | 3000 | 180 |
| Cr+Cu+Ni+Zn | 4000 | 264 |

Bien entendu, l'invention n'est évidemment pas limitée au mode décrit ci-dessus, mais en couvre au contraire toutes les variantes, notamment en ce qui concerne le marc, les produits fibreux, les produits absorbants utilisés, le nombre de passages et la quantité de graisse injectée au fur et à mesure.

De plus, les pourcentages cités, 20 à 30% de déchets graisseux, matière sèche, correspondent à l'optimisation du procédé entre la quantité de déchets graisseux digérés et la durée du traitement.

Le dispositif qui vient d'être décrit est relativement simple. On peut imaginer des dispositifs relativement plus complexes qui assurent le brassage en continu du mélange, l'injection automatique d'air, de liquide et de graisse pâteuse en fonction de renseignements mesurés par des capteurs. Ainsi, le compostage pourrait être réalisé dans un containeur brassé, un cylindre tournant ou dans une enveloppe en matière plastique de forme cylindrique.

Par ailleurs, le procédé de l'invention peut être utilisé pour traiter d'autres déchets organiques, tels que par exemple les boues d'épuration, les matières de vidange provenant des fosses sceptiques, bacs à graisse ou analogue, ou les lisiers et/ou déchets agricoles. Ainsi, selon l'invention les déchets graisseux peuvent être remplacés ou contenir des farines animales et/ou des boues issues des autres procédés de traitement des déchets graisseux.

Enfin, on entend par déchets graisseux tout produit contenant au moins une partie de graisses animales et/ou végétales.

## Revendications

1. Procédé de traitement par compostage de déchets graisseux, à base notamment de graisses animales et/ou végétales, et/ou de farines animales, caractérisé en ce qu'il consiste à mélanger:
- 10 à 40 % de déchets graisseux et/ou de farines animales, de préférence sous forme solide/visqueuse,
- 0 à 50% de produits fibreux, de préférence du fumier,
- 0 à 10% de produits absorbants, de préférence de la sciure,
- le complément étant du marc, de préférence du marc de raisin.

2. Procédé de traitement par compostage de déchets graisseux selon la revendication 1, caractérisé en ce que lesdits déchets graisseux sont préalablement soumis à une méthanisation avant le mélange.

3. Procédé de traitement par compostage de déchets graisseux selon la revendication 1 ou 2, caractérisé en ce que le marc et au moins les produits fibreux sont brassés préalablement à l'incorporation des déchets graisseux.

4. Procédé de traitement par compostage de déchets graisseux selon l'une quelconque des revendications 1 à 3, caractérisé en ce que le mélange formé est disposé sous forme d'andains (24) qui sont brassés régulièrement afin d'homogénéiser et d'oxygéner le mélange.

5. Procédé de traitement par compostage de déchets graisseux selon la revendication 4, caractérisé en ce qu'au moment du brassage, une quantité de déchets graisseux, de préférence pâteux/visqueux, est injectée dans l'andain (24).

6. Procédé de traitement par compostage de déchets graisseux selon l'une quelconque des revendications 1 à 5, caractérisé en ce que les déchets graisseux sont préalablement filtrés afin de séparer les phases solide et liquide grâce à un filtre biodégradable.

7. Procédé de traitement par compostage de déchets graisseux selon l'une quelconque des revendications 1 à 6, caractérisé en ce qu'on pulvérise un liquide sur le mélange, de préférence la phase liquide issue de la filtration préalable, afin de compenser l'évaporation causée par la réaction exothermique et maintenir un taux d'humidité adéquat.

8. Dispositif pour la mise en oeuvre du procédé selon l'une quelconque des revendications 1 à 7, caractérisé en ce qu'il comprend une aire étanche (20) équipée de moyens (22) de récupération des éventuels effluents résiduels ainsi que des moyens (34) de brassage et d'injection de graisses sous forme pâteuse/visqueuse, et éventuellement des moyens (26) pour souffler ou aspirer de l'air dans le mélange ainsi que des moyens de pulvérisation d'un liquide sur le mélange.

9. Dispositif selon la revendication 8, caractérisé en ce qu'il comprend des moyens de filtration biodégradable constitués d'un filtre (10) formé par un lit à base de marc de raisin (14).
